# FASCICULE DE BREVET EUROPEEN

(11) **EP 2 982 925 B1**
(45) Date de publication et mention de la délivrance du brevet: **25.01.2017**
(21) Numéro de dépôt: 15175395.1
(22) Date de dépôt: 06.07.2015
(51) Int. Cl.: F28F 9/02, F01D 9/06, F02K 3/115, F28D 9/00, F02C 7/10

(54) **ECHANGEUR THERMIQUE À PLAQUES ET À EFFICACITÉ THERMIQUE AMÉLIORÉE POUR TURBOMOTEUR**
WÄRMETAUSCHER MIT PLATTEN UND VERBESSERTER THERMISCHER WIRKSAMKEIT FÜR TURBOMOTOR
A PLATE HEAT EXCHANGER OF IMPROVED THERMAL EFFICIENCY FOR A TURBOSHAFT ENGINE

(30) Priorité: 25.07.2014 FR 1401716
(43) Date de publication de la demande: 10.02.2016
(73) Titulaire: Airbus Helicopters, 13725 Marignane Cedex (FR)
(72) Inventeur: HONNORAT, Olivier, 13290 AIX EN PROVENCE (FR); DUBOURG, Christophe, 13100 LE THOLONET (FR)
(74) Mandataire: Pouillot, Laurent Pierre Paul

(56) Documents cités:
- WO-A1-83/01998
- FR-A1- 2 866 699
- FR-A1- 2 988 822

## Description

La présente invention se trouve dans le domaine des échangeurs de chaleur. L'invention concerne un échangeur thermique à plaques à efficacité thermique améliorée selon le préambule de la revendication 1 dans lequel deux fluides circulent de préférence à contre-courant. FR2866699 divulgue un tel échangeur thermique. Cet échangeur thermique est particulièrement destiné au réchauffement de l'air d'admission d'une turbine à gaz équipant un aéronef. L'invention concerne également une turbine à gaz équipée de cet échangeur ainsi qu'un aéronef à voilure tournante, tel un hélicoptère, motorisé par une ou plusieurs de ces turbines à gaz.

En effet, il est connu que le rendement des turbines à gaz est relativement faible. Notamment pour les turbomoteurs, type particulier de moteurs avec des turbines à gaz utilisés traditionnellement pour les aéronefs à voilures tournantes, ce rendement est de l'ordre de 25%.

Une solution connue pour améliorer ce rendement est de réchauffer l'air, après compression et avant son admission dans la chambre de combustion du turbomoteur. Cela permet alors de réduire le besoin thermique dans la chambre de combustion, et par suite, de réduire la consommation en carburant du turbomoteur.

Ce réchauffement de l'air d'admission peut notamment être obtenu en utilisant la chaleur des gaz d'échappement sortant de la turbine, cette chaleur n'étant généralement pas utilisée. Pour cela, des échangeurs thermiques adaptés sont notamment utilisés dans les centrales thermiques industrielles.

Par contre, l'application de tels échangeurs au domaine spécifique des turbomoteurs d'aéronefs se heurte à plusieurs problèmes majeurs, la masse et le volume de ces échangeurs ainsi qu'une perte de puissance du moteur utilisant un tel échangeur.

En effet, les gaz d'échappement sortent de la turbine à grande vitesse et leur circulation dans un échangeur récupérant une partie de leur chaleur génère des pertes de charge importantes sur la circulation de ces gaz d'échappement, entraînant une perte de puissance du turbomoteur.

De plus, le volume disponible dans un aéronef étant restreint, l'implantation d'un échangeur sur un turbomoteur pose des problèmes d'encombrement. Enfin, la masse est également un critère important affectant les performances de l'aéronef.

On connait le document FR2280870 qui décrit un échangeur dont les deux fluides circulent à contre courant. Cet échangeur est formé par des plaques métalliques, en aluminium par exemple, comportant des ondulations régulières. Ces ondulations sont parallèles ente elles et perpendiculaires aux flux des deux fluides.

Les deux cavités constituées par ces plaques ont un même volume, l'espacement entre les plaques étant constant et assuré par des entretoises et des bossages sur chaque plaque. L'étanchéité entre les plaques est obtenue par l'utilisation de matière plastique synthétique, la fixation des plaques entre elles étant obtenue par sertissage.

Le document US6016865 divulgue un échangeur à plaques pour l'échange thermique entre un premier fluide à haute pression et faible débit et un second fluide à basse pression et grand débit. Chaque plaque comporte des formes en saillie et en creux en chevrons, qui sont inclinées par rapport aux flux des fluides. Ces formes sont également inclinées entre elles sur deux plaques adjacentes.

Les plaques sont assemblées deux par deux, par soudure ou par brasure par exemple, sur leurs zones périphériques et au niveau des points d'appui entre les formes en creux pour former des modules. Ces modules sont ensuite empilés les uns sur les autres, étant en appui sur des bossages. Ainsi, les fluides peuvent circuler dans deux volumes indépendants, permettant un échange thermique entre eux.

Par ailleurs, le document EP1122505 décrit un échangeur thermique à plaques dont les plaques regroupées deux à deux sont positionnées dans un carter. De plus, chaque plaque comporte plusieurs cheminées qui, une fois regroupées, forment des conduites d'entrée et des conduites de sortie de l'échangeur.

On connait également le document FR2866699 qui décrit un échangeur à plaques formé par des plaques métalliques nervurées et soudées entre elles. Chaque plaque comporte des zones d'extrémité dans lesquelles les nervures sont rectilignes et parallèles entre elles et une zone centrale dans laquelle les nervures ont une forme de chevron.

De plus, le document WO83/01998 décrit un échangeur à plaques munies de creux et de crêtes. Les plaques sont en appui sur des points de contact des crêtes de deux plaques adjacentes. Ces crêtes comportent des zones embouties limitant le nombre de ces points de contact entre deux plaques adjacentes et, par suite, réduisant les pertes de charge générées sur le fluide circulant entre ces plaques.

Enfin, on connait le document FR2988822 qui décrit un échangeur thermique comportant une pluralité de plaques. Chaque plaque comporte une multitude d'ondulations sinusoïdales parallèles et de hauteurs différentes et deux cheminées. Les plaques sont associées par paire en s'appuyant sur les ondulations les moins hautes et les modules formés par ces paires de plaques sont en appui sur les ondulations les plus hautes. Les diverses ondulations participent à l'agitation des fluides améliorant ainsi leurs échanges thermiques. Les plaques de cet échangeur sont de faibles épaisseurs et réalisées en Inconel^{®}.

Ces différents échangeurs à plaques sont utilisables dans un moteur, leurs volumes et leurs masses étant dans des proportions raisonnables. Cependant, ils ne permettent pas de répondre à l'ensemble des contraintes générées par un turbomoteur équipant un aéronef à voilure tournante.

Hormis les contraintes de volumes et de masse précédemment évoquées, les gaz d'échappement d'un turbomoteur sont extrêmement chauds, de l'ordre de 700°C (degrés Celsius). De fait, les éléments constituant l'échangeur doivent être capables de résister à de telles températures. De plus, au démarrage du moteur, une variation de température très important et rapide, avec un passage d'une température de l'ordre de 15°C à 700°C en une dizaine de secondes se produit au sein de l'échangeur, et notamment sur chaque module constitué par l'association de deux plaques.

De plus, l'écart de température entre ces gaz d'échappement et l'air d'admission est important, de l'ordre de 300°C, voire près de 600°C au démarrage du turbomoteur. De même, l'écart de pression entre les deux fluides est important, les gaz d'échappement sortant de la turbine à la pression atmosphérique, alors que l'air d'admission entre dans l'échangeur à une pression comprise entre 6 et 11 bars.

Ces différences de pression et de température entre les deux fluides sont génératrices de contraintes thermiques et mécaniques sur l'échangeur, susceptibles d'occasionner notamment des déformations et/ou des fissures sur les composants de cet échangeur ainsi que des criques ou des ruptures au niveau des soudures. Par la suite, l'étanchéité des modules de l'échangeur peut se dégrader, des fuites apparaissant au niveau de ces modules.

Par ailleurs, pour avoir un rendement thermique correct de l'échangeur, c'est-à-dire une grande capacité de transmettre la chaleur des gaz d'échappement à l'air d'admission, les fluides doivent circuler sur une surface d'échange importante et avec un bon échange thermique. Par suite, la convection thermique entre les deux fluides est importante.

De plus, afin d'utiliser au mieux cette surface d'échange, il est important d'avoir une répartition uniforme des fluides sur ces surfaces d'échange dès leur entrée dans l'échangeur thermique. Cependant, selon l'implantation de l'échangeur thermique, notamment pour son utilisation avec un turbomoteur d'aéronef, et son encombrement, les plaques constituant l'échangeur peuvent être assez larges. De plus, suivant cette implantation, les conduites d'entrée et de sortie peuvent être plus ou moins excentrées par rapport à cette largeur des plaques.

Par suite, la distribution du premier fluide n'est pas uniforme sur la largeur des plaques de l'échangeur, le premier fluide se répartissant naturellement autour de la conduite d'entrée pour se diriger au plus vite vers la conduite de sortie. Ainsi, une zone se trouvant directement entre une conduite de d'entrée et une conduite de sortie est très bien alimentée par le premier fluide alors qu'une zone excentrée par rapport aux conduites d'entrée et/ou de sortie est moins bien alimentée.

Un phénomène inverse peut également se produire au niveau de la jonction entre les plaques et les conduites de sortie. Le premier fluide se trouvant sur certaines zones des plaques s'évacue alors plus facilement et rapidement que pour d'autres zones plus éloignées et/ou excentrées des conduites de sortie. L'échange thermique entre les fluides est alors plus efficace au niveau de ces zones de ces plaques se remplissant et s'évacuant rapidement que pour les autres zones.

En outre, un brassage des fluides entraîne une augmentation de la convection entre ces fluides et, par suite, permet également d'améliorer cet échange thermique. Par contre, ce brassage crée un écoulement turbulent de ces fluides, générant des pertes de charge qui peuvent être importantes. Les pertes de charge des fluides circulant dans l'échangeur et le coefficient d'échange thermique entre ces fluides sont donc directement dépendants.

Notamment, les pertes de charge d'un fluide sont proportionnelles au premier ordre au carré de la vitesse de ce fluide. De fait, l'air d'admission circulant à faible vitesse, les pertes de charge subies sont très faibles. Par contre, les pertes de charge des gaz d'échappement sont d'autant plus importantes qu'ils sortent de la turbine à grande vitesse. Ces pertes de charge entraînent alors une perte de puissance du turbomoteur, qui est préjudiciable pour certaines phases de vol particulières, telles que les phases de décollage, d'atterrissage et de vol stationnaire.

De fait, les performances de l'échangeur sont entre autres liées au compromis existant entre les pertes de charges des fluides circulant dans l'échangeur, et en particulier les gaz d'échappement, et le coefficient d'échange thermique.

Les pertes de charge d'un fluide en régime turbulent sont notamment liées au nombre de Reynold Rₑ de ce fluide. Le nombre de Reynold Rₑ caractérise un écoulement, et en particulier la nature de son régime qui peut notamment être laminaire, transitoire ou bien turbulent. Le nombre de Reynold Rₑ dépend principalement de la vitesse du fluide, de sa masse volumique et de sa viscosité dynamique. Dans le cas de l'écoulement dans un échangeur thermique, la vitesse, la masse volumique et la viscosité d'un fluide dépendent directement de sa température, qui est donc le paramètre clé qui fait varier le nombre de Reynold Rₑ.

Il est connu que pour maximiser l'utilisation de la surface d'échange entre deux fluides dans un échangeur thermique et optimiser ainsi l'efficacité de l'échange thermique, il est important de conserver un nombre de Reynold Rₑ constant le long de l'échangeur afin de garder un coefficient d'échange thermique constant et des pertes de charge elles-aussi sensiblement constantes.

Cependant, la température des fluides circulant dans l'échangeur varie généralement le long de l'échangeur entraînant une variation du nombre de Reynold Rₑ de ce fluide. Notamment dans le cas d'un échangeur thermique équipant un aéronef, la température de l'air d'admission augmente d'environ 200°C en traversant cet échangeur, entraînant une variation importante de son nombre de Reynold Rₑ et, par suite, une baisse du rendement de l'échange thermique.

La présente invention a alors pour objet de proposer un échangeur thermique à plaques permettant de s'affranchir des limitations mentionnées ci-dessus et plus particulièrement d'améliorer l'efficacité de l'échange thermique entre les fluides circulant dans l'échangeur thermique.

Selon l'invention, un échangeur thermique comporte une pluralité de modules formés de deux plaques métalliques. Chaque plaque comporte une zone périphérique, au moins une cheminée d'entrée, au moins une cheminée de sortie et une zone interne crénelée comportant des crêtes et des creux.

La zone périphérique est de préférence plane et forme alors un plan inférieur P1 dans lequel se situe le fond des creux. Chaque cheminée d'entrée et chaque cheminée de sortie s'élèvent de la zone périphérique jusqu'à un plan supérieur P2 parallèle au plan inférieur P1. Les crêtes se situent dans un plan intermédiaire P3 parallèle aux plans inférieur P1 et supérieur P2. Ce plan intermédiaire P3 peut être positionné entre les plans inférieur P1 et supérieur P2 ou bien être confondu avec le plan supérieur P2.

Les plaques sont assemblées par paire pour former un module. Ces deux plaques sont en appui d'une part au niveau de leurs zones périphériques et d'autre part au niveau des points de contact des creux. Ces deux plaques sont fixées d'une part au niveau des points d'appui de leurs zones périphériques et d'autre part au niveau d'au moins un point d'appui de leurs creux.

Ces deux plaques sont fixées par exemple par soudure et de préférence par brasure.

L'échangeur thermique selon l'invention est formé par l'empilement de plusieurs modules de telle sorte que deux modules adjacents sont en appui au moins au niveau des cheminées d'entrée et de sortie. Ces deux modules adjacents peuvent éventuellement être également en appui au niveau d'au moins un point d'appui de leurs crêtes. Les modules adjacents sont fixés entre eux par exemple par soudure et de préférence par brasure.

L'échangeur thermique selon l'invention comporte également un carter dans lequel sont logés les modules, ce carter étant muni de plusieurs parois.

En outre, chaque module extrême de l'empilement des modules est fixé à une paroi au moins au niveau de chaque cheminée d'entrée et de chaque cheminée de sortie par soudure et de préférence par brasure. On entend par « modules extrêmes » le premier et le dernier modules de l'empilement des modules de l'échangeur thermique.

Dans un tel échangeur, les directions des creux et des crêtes de chaque plaque forment un premier angle *β* avec la direction de circulation des fluides dans l'échangeur et les directions des creux et des crêtes de deux plaques adjacentes forment un second angle *θ* non nul entre elles.

Une conduite d'entrée de l'échangeur est formée par l'assemblage d'une cheminée d'entrée de chaque plaque constituant les modules. De même, une conduite de sortie est formée par l'assemblage d'une cheminée de sortie de chacune de ces plaques.

De fait, cet échangeur thermique comporte une ou plusieurs conduites d'entrée et une ou plusieurs conduites de sortie. Cet échangeur thermique comporte autant de conduites d'entrée que les plaques constituant les modules comportent de cheminées d'entrée et autant de conduites de sortie que ces plaques comportent de cheminées de sortie.

Des ouvertures sont agencées dans au moins une paroi du carter pour permettre à un premier fluide d'entrer dans chaque conduite d'entrée et à ce premier fluide de sortir de chaque conduite de sortie. Deux ouvertures supplémentaires sont agencées dans le carter pour former une entrée et une sortie de l'échangeur afin de permettre à un second fluide d'entrer et de sortir de l'échangeur thermique.

Une première cavité est constituée par l'espace intérieur d'un module, c'est à dire par l'espace entre les deux plaques de ce module. Les premières cavités sont reliées entre elles par l'intermédiaire de chaque conduite d'entrée et de chaque conduite de sortie. Une extrémité des conduites d'entrée et de sortie débouche hors de l'échangeur au niveau des ouvertures agencées dans les parois du carter. Le premier fluide circule alors dans la totalité des premières cavités des modules de l'échangeur thermique entre chaque conduite d'entrée et chaque conduite de sortie.

Une seconde cavité est principalement constituée par l'espace entre deux modules adjacents et également par l'espace entre chaque module extrême et une paroi du carter.

Une troisième cavité est constituée par l'espace situé entre les zones périphériques des modules et les parois du carter. Le second fluide peut également circuler dans cette troisième cavité.

Les secondes cavités sont reliées entre elles notamment au niveau de l'entrée et de la sortie de l'échangeur ainsi que par l'espace en périphérie de chaque plaque constituant la troisième cavité. La circulation du second fluide est limitée par les parois de ce carter. Le second fluide circule alors dans la totalité des secondes cavités des modules de l'échangeur thermique entre l'entrée et la sortie de l'échangeur thermique.

Ce second fluide peut ainsi circuler parallèlement au premier fluide et de préférence en sens inverse à ce premier fluide : on a alors un échangeur à contre courant. Toutefois, le second fluide peut également circuler parallèlement et dans le même sens que le premier fluide : on a alors un échangeur à co-courant.

Ce dispositif est remarquable en ce que chaque plaque de l'échangeur thermique selon l'invention comporte une zone de distribution à proximité de chaque cheminée d'entrée et de chaque cheminée de sortie. Une telle zone de distribution située entre la zone interne crénelée et une cheminée d'entrée facilite le remplissage d'un module par le premier fluide. De même, une telle zone de distribution située entre la zone interne crénelée et une cheminée de sortie facilite l'évacuation de ce module par le premier fluide.

Chaque zone de distribution comporte des canaux dans lesquels le premier fluide peut circuler d'une part d'une cheminée d'entrée vers la zone interne crénelée et d'autre part de la zone interne crénelée vers une cheminée de sortie. Ces canaux sont orientés au niveau d'une cheminée d'entrée afin d'alimenter de façon sensiblement uniforme la totalité de la zone interne crénelée d'une plaque. De même, ces canaux sont orientés au niveau d'une cheminée de sortie afin de vider de façon sensiblement uniforme la totalité de la zone interne crénelée d'une plaque.

Ces canaux peuvent avoir différentes orientations suivant leur position d'une part autour de la cheminée d'entrée ou de sortie et d'autre part à proximité de la zone interne crénelée.

Notamment, ces canaux peuvent être orientés selon différentes directions dans différentes parties de cette zone de distribution.

Par exemple, on peut séparer la zone de distribution en deux parties. Une première partie est constituée par l'espace situé entre la cheminée d'entrée ou de sortie et la zone interne crénelée selon la direction de circulation du premier fluide. Une seconde partie est constituée par le reste de la zone de distribution, c'est-à-dire l'espace situé autour de la cheminée d'entrée ou de sortie, dans cette zone de distribution en dehors de cette première partie.

Ces canaux sont alors de préférence parallèles à la direction de circulation du premier fluide dans l'échangeur pour la première partie de la zone de distribution. Par contre, pour la seconde partie de la zone de distribution, ces canaux sont de préférence inclinés par rapport à la direction de circulation du premier fluide à proximité de la cheminée d'entrée ou de sortie. Ensuite, dans cette seconde partie de la zone de distribution, ces canaux sont parallèles à la direction de circulation du premier fluide à proximité de la zone interne crénelée permettant alors de remplir ou bien de vider directement la zone interne crénelée.

Chaque zone de distribution est la plus étroite possible afin de favoriser une zone interne crénelée de surface maximum. En effet, l'échange thermique entre le premier et le second fluide est maximum au niveau de cette zone interne crénelée. Un échange thermique entre le premier et le second fluide peut toutefois avoir lieu dans les zones de distribution, mais cet échange thermique n'est pas optimum, les canaux de cette zone de distribution n'étant pas adaptés à cet échange thermique.

La principale fonction des canaux des zones de distribution est de répartir uniformément le premier fluide sur toute la largeur de la zone interne crénelée en minimisant les pertes de charge induites par cette zone de distribution. Ces canaux permettent également d'évacuer efficacement et de façon uniforme le premier fluide de la zone interne crénelée en minimisant également les pertes de charge induites par cette zone de distribution.

Contrairement aux zones crénelées de deux plaques adjacentes dont les directions des creux et des crêtes sont sécantes et forment un second angle *θ*, les canaux des zones de distribution de deux plaques adjacentes sont parallèles et identiques. Ainsi, lors de l'assemblage de deux plaques formant un module, les canaux de chaque plaque se font face deux à deux et se regroupent afin de constituer des conduits, facilitant l'alimentation et l'évacuation du premier fluide de la zone interne crénelée de ces deux plaques adjacentes.

De plus, ces deux plaques adjacentes sont fixées par exemple par soudure et de préférence par brasure pour former un module. Avantageusement, les canaux de ces deux plaques adjacentes étant parallèles permettent de réaliser de fait plusieurs points de fixation entre ces plaques au niveau de chaque zone de distribution. Avantageusement, la fixation d'un module est ainsi améliorée sur chaque zone de distribution, c'est-à-dire à proximité des cheminées d'entrée et de sortie, en comparaison avec un échangeur thermique dont les points de fixation d'un module sont situés au croisement des creux de deux plaques adjacentes. Ainsi, les modules de l'échangeur selon l'invention ont une meilleure résistance à la pression statique du premier fluide circulant dans chaque module.

La zone de distribution peut également comporter un sillon dans lequel débouchent les canaux. Ce sillon est situé à la jonction de cette zone de distribution avec la zone interne crénelée. Les creux et les crêtes de la zone interne crénelée débouchent de part et d'autre de la zone interne crénelée respectivement dans au moins un sillon d'au moins une zone de distribution. Ainsi, les creux et les crêtes de la zone interne crénelée commencent dans le sillon d'au moins une zone de distribution et se terminent dans le sillon d'au moins une autre zone de distribution. De la sorte, ce sillon contribue également à uniformiser le remplissage ou l'évacuation la zone interne crénelée d'un module par le premier fluide.

Les canaux peuvent prendre différentes formes. L'homogénéité de l'alimentation du premier fluide sur l'ensemble de la zone interne crénelée d'un module ainsi que de son évacuation de la zone interne crénelée de ce module est fonction de la section de chaque canal et également de la surface de la zone interne crénelée alimentée par chaque canal. Ainsi, plus la surface de la zone interne crénelée alimentée par un canal est grande, plus la section de ce canal doit être grande afin de garantir une distribution uniforme de ce premier fluide sur la totalité de la zone interne crénelée par l'ensemble des canaux de la zone de distribution.

De préférence, les canaux sont uniquement en creux dans chaque plaque, la profondeur de ces canaux étant constante sur une plaque et identique pour chaque canal. De fait, afin de remplir de façon uniforme la zone interne crénelée d'un module, plus la surface de la zone interne crénelée alimentée par un canal est grande, plus la largeur de ce canal doit être grande. Pratiquement, la largeur d'un premier canal en creux est plus importante que pour un second canal en creux lorsque ce premier canal alimente une surface plus importante de la zone interne crénelée que le second canal.

Par ailleurs, un canal peut se diviser en plusieurs canaux secondaires dans la zone de distribution afin de remplir ou bien d'évacuer plus efficacement la zone interne crénelée. Les canaux secondaires débouchent au niveau de la zone interne crénelée alors que le canal dont sont issus ces canaux secondaires débouche dans une cheminée d'entrée ou bien de sortie. Cette division d'un canal est notamment utile lorsque ce canal alimente une surface importante de la zone interne crénelée. Les canaux secondaires permettent ainsi de remplir ou bien d'évacuer de façon uniforme cette surface importante de la zone interne crénelée.

Selon un autre mode de réalisation de l'invention, chaque canal peut être formé par un creux de distribution et une crête de distribution. Ce creux de distribution et cette crête de distribution peuvent être de la même forme et dans la continuité des creux et des crêtes de la zone interne crénelée. Cependant, les crêtes de distribution ont une hauteur supérieure aux crêtes de la zone interne crénelée afin de permettre une distribution homogène du premier fluide dans la zone interne crénelée. Cette hauteur des crêtes de distribution est décroissante jusqu'à la zone interne crénelée. Par contre, les creux de distribution et les creux de la zone interne crénelée sont de même profondeur. Pour ce mode de réalisation, la zone de distribution est localisée de préférence dans une zone de la plaque pour laquelle la distance entre une cheminée d'entrée ou de sortie et la zone interne crénelée est relativement importante.

L'utilisation de cette zone de distribution sur chaque plaque à proximité de chaque cheminée d'entrée permet de distribuer de façon uniforme le premier fluide dans l'ensemble de la zone interne crénelée. De même, l'utilisation de cette zone de distribution sur chaque plaque à proximité de chaque cheminée de sortie permet d'évacuer de façon uniforme le premier fluide dans la totalité de la zone interne crénelée. Ainsi, en optimisant l'alimentation et l'évacuation de la zone interne crénelée de chaque module, l'échange thermique entre les premier et second fluides est alors notablement amélioré par rapport à un échangeur thermique classique. Avantageusement, cette optimisation est obtenue sans augmentation du volume de l'échangeur thermique, ni ajout de composants supplémentaires. De la sorte, la masse d'un tel échangeur n'est pas augmentée tout en améliorant son efficacité thermique, ce qui est très important notamment pour une application à bord d'un aéronef à voilure tournante.

Enfin, pour éviter de générer des pertes de charge parasites importantes sur le second fluide circulant en entrée et en sortie de l'échangeur au contact de ces zones de distribution, des conduits secondaires peuvent être ajoutés à chaque zone de distribution dans une variante de l'échangeur selon l'invention. Le second fluide circule à grande vitesse dans les secondes cavités. De fait, ce second fluide est très sensible aux pertes de charges. Les canaux de cette zone de distribution ainsi que l'espace entre ces canaux peuvent être générateurs de telles pertes de charges.

Selon une première variante de l'échangeur, ces conduits secondaires sont des contre-emboutis orientés selon une direction sensiblement parallèle à la direction de circulation de ce second fluide dans l'échangeur. On entend par « contre embouti » des formes réalisées dans un sens de poinçonnage inverse à celui des canaux, les canaux constituant des emboutis. Ces conduits secondaires sont situés sur les canaux qui sont inclinés par rapport à la direction de circulation de ce second fluide et réduisent localement la hauteur de ces canaux. Le second fluide peut alors circuler dans ces conduits secondaires pour traverser chaque zone de distribution diminuant ainsi localement l'apparition de pertes de charges sur ce second fluide.

Selon une seconde variante de l'échangeur, ces conduits secondaires sont des emboutis orientés selon une direction sensiblement parallèle à la direction de circulation de ce second fluide dans l'échangeur. Ces conduits secondaires sont situés entre les canaux qui sont inclinés par rapport à cette direction de circulation de ce second fluide, réduisant ainsi la profondeur de l'espace entre ces canaux dans lequel peut circuler le second fluide. Les turbulences générées par la présence de ces canaux sur le second fluide sont ainsi localement diminuées limitant l'apparition de pertes de charges sur ce second fluide.

Avantageusement, ces conduits secondaires selon cette seconde variante créent également des passages entre les canaux qui peuvent aussi améliorer la circulation du premier fluide dans ces canaux, évitant par exemple un effet de saturation du débit du premier fluide dans certains canaux.

En outre, le premier angle *β* entre d'une part les directions des creux et des crêtes de chaque plaque et d'autre part la direction de circulation des fluides peut varier dans l'échangeur.

Au sein de l'échangeur, des échanges thermiques entre les deux fluides circulant dans les premières et secondes cavités sont réalisés par l'intermédiaire des plaques, les deux fluides circulant en parallèle de part et d'autre des plaques et de préférence en sens inverse afin d'obtenir de meilleurs échanges thermiques.

Par ailleurs, la forme des creux et des crêtes des plaques a un effet sur cet échange thermique entre les deux fluides.

En effet, les performances de l'échange thermique entre les deux fluides sont notamment liées à un compromis entre les pertes de charges subies par les fluides et le coefficient d'échange thermique. Une augmentation de pertes de charge entraîne une augmentation de la convection entre fluides et, par suite, une augmentation de l'échange thermique et de ce fait de l'efficacité de l'échangeur thermique. Ces paramètres sont donc directement dépendants de la forme des creux et des crêtes ainsi que de leurs dimensions.

Les creux et les crêtes peuvent ainsi prendre plusieurs formes utilisées traditionnellement dans un échangeur thermique. Ces différentes formes peuvent notamment être imposées par le matériau constituant ces plaques et d'éventuelles contraintes de mise en forme de ces plaques ainsi qu'afin d'optimiser les échanges thermiques entre le premier et le second fluides.

Les creux et les crêtes des plaques ont par exemple des formes de créneaux de section rectangulaire ou bien de formes trapézoïdales. Les crêtes et les creux peuvent également être des ondulations sinusoïdales. De telles ondulations sinusoïdales sont favorables à une bonne circulation des premier et second fluides dans les premières et secondes cavités et permettent d'avoir une répartition homogène de la pression de chaque fluide sur chaque surface des plaques. En effet, ces formes ne présentent ni arête ni angle vif. De fait, les fluides peuvent suivre les ondulations favorisant ainsi les échanges thermiques tout en limitant les pertes de charge générées par ces formes sur les premier et second fluides.

En outre, les creux et les crêtes d'une plaque peuvent être selon une seule direction telle une ligne droite sur l'ensemble de cette plaque.

A contrario, les creux et les crêtes d'une plaque peuvent être selon plusieurs directions sécantes sur l'ensemble de cette plaque. Par exemple, les creux et les crêtes sont selon deux directions sécantes formant ainsi des chevrons, c'est-à-dire que chaque creux et chaque crête d'une plaque sont constitués de deux droites formant un « V », ces deux droites formant un angle aigu entre elles. De tels creux et crêtes en forme de chevron son généralement positionnés de façon sensiblement symétrique vis-à-vis de la direction de circulation des fluides dans l'échangeur thermique. Ainsi chacune des deux droites constituant ces chevrons forme un premier angle *β* avec cette direction de circulation des fluides.

Bien entendu, d'autres formes sont envisageables pour les creux et crêtes de ces plaques. Ces formes doivent toutefois être compatibles avec la réalisation et l'empilement des modules ainsi que la circulation des premier et second fluides.

Par ailleurs, pour avoir un bon compromis entre échange thermique et pertes de charge, les crêtes et les creux des plaques forment un premier angle *β* avec la direction de circulation des deux fluides. En effet, si les directions des creux et des crêtes étaient parallèles à la direction de circulation des fluides, leurs effets sur les pertes de charge seraient minimes, mais elles généreraient par contre peu de mouvements de ces fluides. Elles ne favoriseraient alors pas les turbulences, et par suite, les échanges thermiques entre les fluides.

A contrario, si les directions des creux et des crêtes étaient perpendiculaires à la direction de circulation des fluides, elles généreraient beaucoup de mouvements, donc de turbulences sur ces fluides, favorisant ainsi les échanges thermiques. Par contre, leurs effets sur les pertes de charge seraient alors importants.

En conséquence, pour avoir un bon compromis permettant de générer des turbulences acceptable sur les deux fluides et, par suite, un bon échange thermique tout en limitant les pertes de charge sur ces deux fluides, les directions des creux et des crêtes sont inclinées par rapport à la direction de circulation des deux fluides d'un premier angle *β* aigu. Par exemple, ce premier angle *β* entre les directions des creux ainsi que celles des crêtes et la direction de circulation des deux fluides est compris entre 30° et 60°.

De même, un second angle *θ* entre les directions des creux et des crêtes de deux plaques adjacentes a des effets sur les turbulences des écoulements des deux fluides et sur les pertes de charge de ces fluides. De la même manière que précédemment, et pour obtenir un bon compromis entre pertes de charge et turbulences, et, par suite, échange thermique, ce second angle *θ* entre les directions des creux et des crêtes de deux plaques adjacentes doit être un angle non nul. Ce second angle *θ* entre les directions des creux et des crêtes de deux plaques adjacentes est de préférence compris entre 60° et 120°.

En outre, Il est connu que pour optimiser l'efficacité de l'échange thermique, il est important de conserver un nombre de Reynold Rₑ sensiblement constant pour les fluides le long de l'échangeur, ce nombre de Reynold Rₑ variant également avec la température du fluide.

La température des fluides circulant dans l'échangeur peut varier de façon importante, notamment dans le cas d'un échangeur thermique équipant un turbomoteur d'un aéronef à voilure tournante. Par exemple, Le premier fluide est constitué par l'air d'admission de la chambre de combustion du turbomoteur sortant d'un compresseur, et le second fluide est constitué par les gaz d'échappement sortant de cette chambre de combustion. La température de l'air d'admission peut alors augmenter d'environ 200°C en traversant cet échangeur, entraînant une variation importante du nombre de Reynold Rₑ du premier fluide. De même, la température des gaz d'échappement peut également diminuer d'une valeur de l'ordre de 200 à 250°C en traversant cet échangeur, entraînant une variation importante du nombre de Reynold Rₑ du second fluide.

La géométrie ainsi que les dimensions des plaques sont généralement définies selon les débits des premier et second fluides circulant dans les premières et secondes cavités et des pertes de charge qui peuvent apparaître sur ces fluides. Notamment, la distance entre le fond des creux et le haut des crêtes correspondant à la profondeur d'emboutissage des plaques doit être la plus grande possible et le pas entre ces creux et ces crêtes le plus petit possible afin de maximiser la surface d'échange entre les premier et second fluides. Cette hauteur et ce pas sont généralement limités par les caractéristiques du matériau des plaques.

Avantageusement, le premier angle *β* formé par la direction des creux et des crêtes avec la direction de circulation des fluides dans l'échangeur thermique peut alors être utilisé pour compenser la variation de température des fluides dans l'échangeur thermique. En effet, si ce premier angle *β* augmente au cours de la progression d'un premier fluide dans l'échangeur et de son augmentation de température, ce premier fluide subit moins de turbulences lors de sa progression dans l'échangeur et conserve alors un nombre de Reynold Rₑ sensiblement constant.

Par ailleurs, le coefficient d'échange thermique du premier fluide qui se réchauffe a plus d'influence sur l'efficacité de l'échangeur thermique que le coefficient d'échange thermique du second fluide qui se refroidit. Ainsi, dans l'échangeur thermique selon l'invention, le premier angle *β* augmente dans le sens de circulation du premier fluide dans les premières cavités afin de maximiser le coefficient d'échange thermique de ce premier fluide.

Par exemple, la variation de ce premier angle *β* est comprise entre 5° et 20° entre une cheminée d'entrée et une cheminée de sortie d'une plaque. De préférence, la variation de ce premier angle *β* est égale à 10° de la conduite d'entrée à la conduite de sortie de l'échangeur.

En outre, le second fluide circulant de préférence à contre courant du premier fluide dans l'échangeur selon l'invention, le premier angle *β* diminue selon le sens de circulation de ce second fluide. De la sorte, la diminution de la température de ce second fluide en traversant l'échangeur peut alors être partiellement compensée par la diminution de ce premier angle *β* selon le sens de circulation de ce second fluide, contribuant avantageusement à optimiser l'échange thermique entre les premier et second fluides dans l'échangeur thermique selon l'invention.

L'échangeur thermique selon l'invention peut de plus comporter, de façon connue, une pluralité de peignes situés dans la troisième cavité. Ces peignes permettent d'orienter le second fluide vers les secondes cavités et également de maintenir l'espacement entre ces modules.

En outre, des volets mobiles peuvent être positionnés dans la troisième cavité, entre les modules et au moins une des parois. Ces volets mobiles permettent, suivant leurs positions, la circulation du second fluide majoritairement dans la troisième cavité ou bien dans les secondes cavités.

Différents matériaux, tels que l'acier doux ou l'aluminium, peuvent être utilisés pour réaliser les plaques de l'échangeur thermique selon l'invention. Cependant, afin de résister au mieux aux sollicitations subies par l'échangeur, notamment lorsqu'il équipe un turbomoteur d'aéronef, les plaques peuvent réalisées à partir d'un matériau connu sous le nom « Inconel^{®} ».

Par ailleurs, pour que l'ensemble de l'échangeur reste homogène, en termes de matière et de dilatation thermique notamment, les parois du carter ainsi qu'éventuellement les peignes et les volets le cas échéant peuvent également être en Inconel^{®}. L'assemblage de l'ensemble de ces composants peut être réalisé par brasage avec de l'Inconel^{®} ou bien un métal très proche de l'Inconel^{®}.

De plus, l'invention a aussi pour objet une turbine à gaz équipée d'un tel échangeur. Le premier fluide est alors constitué par l'air d'admission de la chambre de combustion de la turbine, sortant d'un compresseur, et le second fluide est constitué par les gaz d'échappement sortant de la turbine.

La turbine à gaz comporte au moins une volute froide et au moins une volute chaude. La volute froide permet à l'air d'admission de circuler du compresseur de la turbine vers la conduite d'entrée de l'échangeur, alors que la volute chaude permet à l'air d'admission de circuler de la conduite de sortie de l'échangeur vers la chambre de combustion de la turbine.

La turbine à gaz comporte également au moins une tuyère intermédiaire et une tuyère de sortie. Les gaz d'échappement sortent de la turbine par la tuyère intermédiaire et sont dirigés vers l'entrée de l'échangeur et la tuyère de sortie dirige les gaz d'échappement après qu'ils soient sortis par la sortie de l'échangeur vers l'extérieur de la turbine.

L'échangeur peut être installé dans la continuité de la turbine ou à côté de la turbine. Dans le premier cas, les gaz d'échappement sont dirigés directement vers l'échangeur après leur sortie de la turbine, mais le volume d'un tel ensemble turbine à gaz-échangeur est très important.

Dans le second cas, les gaz d'échappement doivent être orientés vers l'échangeur positionné à côté de la turbine à gaz. Pour cela, la tuyère intermédiaire comprend un coude qui, par sa géométrie adaptée, permet d'assurer cette orientation des gaz d'échappement en minimisant les pertes de charge. L'ensemble turbine à gaz-échangeur a alors un volume plus compact que dans le premier cas, et peut, par exemple, être intégré dans un aéronef.

Afin de résister aux contraintes thermiques et mécaniques tout en assurant l'étanchéité nécessaire au bon fonctionnement de l'échangeur, des soufflets métalliques sont agencés à la jonction entre l'échangeur et les différents éléments de la turbine à gaz.

En effet, l'échangeur se trouvant dans un environnement à haute température, l'ensemble des composants de l'échangeur et du moteur peuvent se dilater. Ces soufflets permettent de palier à ces dilatations. L'environnement de l'échangeur est également soumis à de nombreuses vibrations. Là encore, les soufflets permettent d'absorber ces vibrations.

Ces soufflets se trouvent notamment au niveau des tuyères de sortie de la turbine et de sortie de l'échangeur pour les gaz d'échappement, ainsi qu'au niveau des volutes froide et chaude reliées respectivement aux conduites d'entrée et de sortie de l'air d'admission. De préférence, ces soufflets sont en Inconel^{®}.

Enfin, l'invention a aussi pour objet un aéronef à voilure tournante comportant au moins une turbine à gaz munie d'un échangeur selon l'invention.

L'invention et ses avantages apparaîtront avec plus de détails dans le cadre de la description qui suit avec des exemples de réalisation donnés à titre illustratif en référence aux figures annexées qui représentent :
- la figure 1, une plaque de l'échangeur,
- la figure 2, un module de l'échangeur,
- la figure 3, l'empilage de plaques dans un module,
- les figures 4 et 5, un échangeur selon l'invention,
- les figures 6 et 7, deux vues d'une zone de distribution d'un échangeur,
- la figure 8, un autre mode de réalisation de la zone de distribution,
- la figure 9, une autre plaque de l'échangeur et
- les figures 10 et 11, une turbine à gaz muni de l'échangeur.

Les éléments présents dans plusieurs figures distinctes sont affectés d'une seule et même référence.

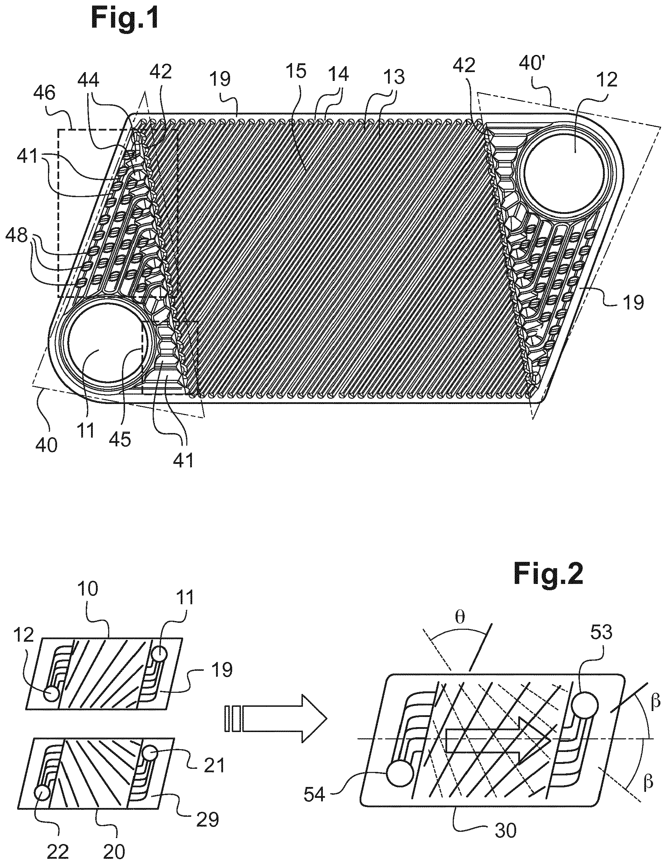

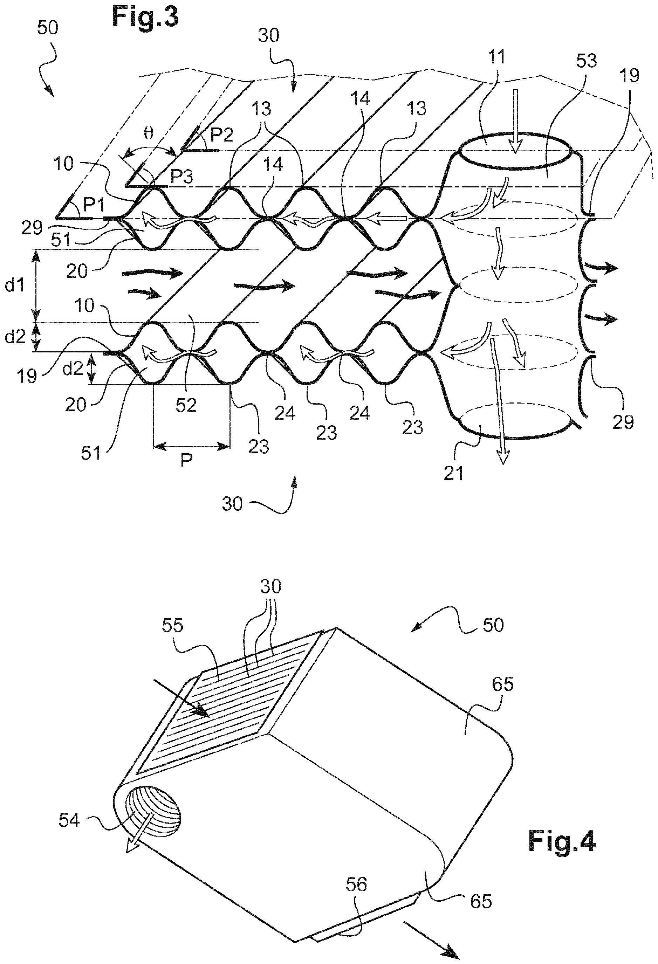

La figure 1 représente une plaque 10 comprenant une zone périphérique 19 plane deux zones de distribution 40,40' et une zone interne crénelée 15 munie d'ondulations sinusoïdales en crêtes 13 et en creux 14. Une cheminée d'entrée 11 et une cheminée de sortie 12, placées à deux coins opposés de la plaque 10, s'élèvent de la zone périphérique 19 jusqu'à un plan supérieur P2 comme indiqué sur la figure 3.

La zone périphérique 19 forme un plan inférieur P1, dans lequel se situent les creux 14. Les ondulations en crêtes 13 se situent dans un plan intermédiaire P3, ce plan intermédiaire P3 étant positionné entre les plans inférieur P1 et supérieur P2 et parallèle à ces plans P1,P2.

Un module 30 est formé, selon la figure 2, par l'assemblage de la plaque 10 avec une plaque 20. Les crêtes 13 et les creux 14 de la première plaque 10 forment avec les crêtes 23 et les creux 24 de la seconde plaque 20 un second angle *θ* compris entre 60° et 120°.

Sur la figure 3, on peut voir les points d'appui entre les plaques 10, 20 ainsi que l'empilage des modules 30. Les plaques 10, 20 sont en appui au niveau des creux 14, 24 ainsi que sur leurs zones périphériques 19, 29. Elles sont fixées par brasure au niveau de ces points d'appui pour former les modules 30.

Ces modules 30 sont empilés les uns sur les autres pour former l'échangeur 50 selon l'invention. Ils sont en appui sur les cheminées d'entrée 11, 21 et sur les cheminées de sortie 12, 22. Les modules 30 sont assemblés par brasure au niveau de ces points d'appui.

Les cheminées d'entrée 11, 21 de chaque plaque 10, 20 sont ainsi reliées et forment une conduite d'entrée 53 de l'échangeur 50. De même, les cheminées de sortie 12, 22 forment une conduite de sortie 54.

Les crêtes 13 des plaques 10,20 de deux modules 30 adjacents sont séparées par une première distance d1 non nulle. Une seconde distance d2 correspond à la distance entre le sommet des crêtes 13 et le fond de creux 14 de chaque plaque 10,20, c'est-à-dire à la distance entre le plan inférieur P1 et le plan intermédiaire P3 d'une plaque 10,20.

La première distance d1 est par exemple comprise entre 2 et 3mm alors que la seconde distance d2 est comprise entre 3 et 4mm. L'épaisseur des plaques 10,20 est comprise entre 0.1 et 0.25mm, ces plaques 10,20 pouvant être en Inconel^{®}.

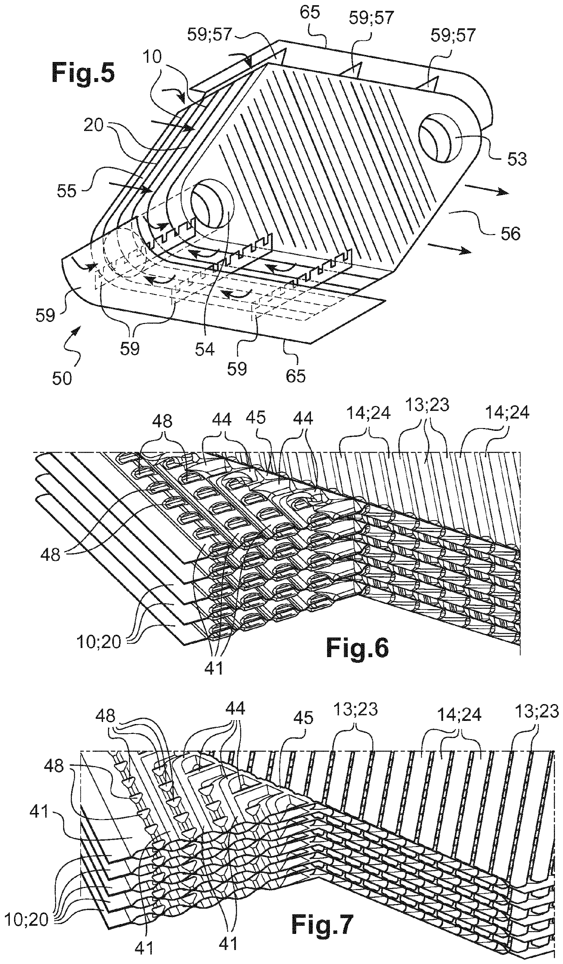

Les figures 4 et 5 représentent un échangeur thermique 50 constitué par l'empilage des modules 30. Cet empilage est placé à l'intérieur d'un carter 60, muni de paroi 65, dans lequel sont agencées une entrée 55 et une sortie 56 de l'échangeur thermique 50.

L'espace entre deux plaques 10, 20 d'un module 30 forme une première cavité 51. Les premières cavités 51 sont reliées par les conduites d'entrée 53 et de sortie 54. L'espace entre deux modules 30 adjacents forme une seconde cavité 52, de même que l'espace entre un module 30 extrême et une paroi 65. Une troisième cavité 58 est constituée par l'espace situé entre les zones périphériques 19 des modules 30 et les parois 65 du carter 60. Les secondes cavités 52 sont reliées entre elles notamment au niveau de l'entrée 55 et de la sortie 56 de l'échangeur 50 ainsi que par la troisième cavité 58.

Un premier fluide entre dans l'échangeur 50 par la conduite d'entrée 53 et sort de l'échangeur 50 par la conduite de sortie 54 et circule alors dans les premières cavités 51. Un second fluide entre dans l'échangeur 50 par l'entrée 55 et sort de l'échangeur 50 par la sortie 56 et circule dans les secondes cavités 52, parallèlement et de préférence en sens inverse du premier fluide. La circulation du second fluide est limitée par les parois 65 de ce carter 60. Le second fluide peut également circuler dans la troisième cavité 58.

Ainsi, les premier et second fluides traversent l'échangeur thermique 50, en assurant un échange thermique entre eux. De plus, les plaques 10, 20 ont une épaisseur suffisamment faible pour permettre un échange thermique entre le premier et le second fluide, indépendamment des capacités de conductivité thermique de ces plaques 10, 20.

Dans l'échangeur 50, les directions des creux 14,24 et des crêtes 13,23 de chaque plaque 10,20 forment un premier angle *β* avec la direction de circulation des fluides comme représenté sur la figure 2.

Chaque plaque 10,20 comporte deux zones de distribution 40,40' munies de canaux 41. Une première zone de distribution 40 est située entre la zone interne crénelée 15 et la cheminée d'entrée 11 afin de faciliter le remplissage d'un module 30 par le premier fluide. De même, une seconde zone de distribution 40' est située entre la zone interne crénelée 15 et la cheminée de sortie 12 afin de faciliter l'évacuation de ce module 30 par le premier fluide.

Ces zones de distribution 40,40' sont étroites afin que la zone interne crénelée 15 soit la plus grande possible, maximisant ainsi l'échange thermique entre le premier et le second fluide.

Les zones de distribution 40,40' peuvent être décomposées en deux parties 45,46, comme représenté sur la figure 1 pour la première zone de distribution 40. Une première partie 45 est constituée par l'espace situé entre la cheminée d'entrée 11 et la zone interne crénelée 15 selon la direction de circulation du premier fluide. Une seconde partie 46 est constituée par le reste de la première zone de distribution 40, en dehors de cette première partie 45.

La première partie 45 de la première zone de distribution 40 étant située entre la cheminée d'entrée 11 et la zone interne crénelée 15, les canaux 41 sont orientés parallèlement à la direction de circulation du premier fluide dans cette première partie 45 afin d'alimenter la zone interne crénelée 15.

Par contre, dans la seconde partie 46 de la première zone de distribution 40, il n'est pas possible d'aller directement de la cheminée d'entrée 11 vers la zone interne crénelée 15 en suivant la direction de circulation du premier fluide dans l'échangeur 50. De fait, les canaux 41 sont tout d'abord orientés, à partir de la cheminée d'entrée 11, de façon inclinée par rapport à la direction de circulation du premier fluide dans l'échangeur 50 afin de pouvoir alimenter l'ensemble de la zone interne crénelée 15 qui fait face à cette seconde partie 46. Ensuite, les canaux 41 sont orientés parallèlement à la direction de circulation du premier fluide à proximité de la zone interne crénelée 15 afin d'alimenter cette zone interne crénelée 15.

La position et l'orientation des canaux 41 de la seconde zone de distribution 40' entre la cheminée de sortie 12 et la zone interne crénelée 15 sont similaires à celles des canaux 41 de la première zone de distribution 40 entre la cheminée d'entrée 11 et la zone interne crénelée 15.

Les figures 6 et 7 représentent des vues de détail en coupe d'une zone de distribution 40 sur des plaques 10,20 assemblées.

Dans un module 30, les canaux 41 des deux plaques 10,20 sont face à face, les canaux 41 des zones de distribution 40 de ces deux plaques 10,20 étant parallèles et identiques. Ainsi, deux canaux 41 de ces deux plaques 10,20 forment un conduit dans lequel peut circuler le premier fluide afin d'alimenter et d'évacuer la zone interne crénelée 15.

Les canaux 41 peuvent avoir des sections différentes selon la surface de la zone interne crénelée 15 qu'ils alimentent. En outre, comme représenté sur les figures 6 et 7, la profondeur de ces canaux 41 est constante et identique pour chaque canal.

Les canaux 41 de la première partie 45 alimentent des premières surfaces de la zone interne crénelée 15 sensiblement égales. Ces canaux 41 de cette première partie 45 ont alors des premières largeurs sensiblement égales.

Les canaux 41 de la seconde partie 46 alimentent des secondes surfaces de la zone interne crénelée 15 sensiblement égales, ces secondes surfaces étant supérieures aux premières surfaces. Par suite, ces canaux 41 de la seconde partie 46 ont des secondes largeurs sensiblement égales et supérieures aux premières largeurs. De plus, ces canaux 41 de la seconde partie 46 se divisent en deux canaux secondaires 44 afin de remplir ou bien d'évacuer efficacement et uniformément ces secondes surfaces de la zone interne crénelée 15, les canaux secondaires 44 débouchant au niveau de la zone interne crénelée 15. Ces canaux secondaires 44 sont sensiblement parallèles à la direction de circulation du premier fluide.

La zone de distribution 40,40' comporte également un sillon 42 dans lequel débouchent les canaux 41. Ce sillon 42 est situé à la jonction de chaque zone de distribution 40,40' avec la zone interne crénelée 15. Les creux 14 et les crêtes 13 de la zone interne crénelée 15 débouchent dans au moins un sillon 42 d'au moins une zone de distribution 40,40' de part et d'autre de cette zone interne crénelée 15. Ainsi, chaque sillon 42 permet également de remplir ou d'évacuer de façon uniforme les creux 14 et les crêtes 13 de la zone interne crénelée15 d'un module 30 par le premier fluide.

Chaque zone de distribution 40,40' comporte également des conduits secondaires 48 sensiblement parallèles à la direction de circulation du premier fluide et du second fluide.

Selon une première variante de l'échangeur représenté sur la figure 6, ces conduits secondaires 48 sont des contre-emboutis orientés selon une direction sensiblement parallèle à la direction de circulation de ce second fluide dans l'échangeur 50 et réalisés sur les canaux 41 qui sont inclinés par rapport à la direction de circulation de ce second fluide. Ces conduits secondaires 48 réduisent localement la hauteur de ces canaux 41. Ces conduits secondaires 48 sont décalés vis à vis des canaux secondaires 44 et facilitent ainsi le passage du second fluide au niveau de chaque zone de distribution 40,40'. Les pertes de charge générées par chaque zone de distribution 40,40' sur le second fluide sont ainsi réduites.

Selon une seconde variante de l'échangeur représenté sur la figure 7, ces conduits secondaires 48 sont des emboutis orientés selon une direction sensiblement parallèle à la direction de circulation de ce second fluide dans l'échangeur 50 et moins profonds que les canaux 41. Ces conduits secondaires 48 sont situés entre les canaux 41 de la seconde partie 46 qui sont orientés de façon inclinée par rapport à la direction de circulation du premier fluide et dans la continuité des canaux secondaires 44. Ces conduits secondaires 48 réduisent ainsi la profondeur de l'espace entre les canaux 41. Ces conduits secondaires 48 permettent ainsi d'une part de limiter localement l'apparition de turbulences et, par suite, de pertes de charges sur le second fluide et d'autre part au premier fluide de circuler entre les canaux 41.

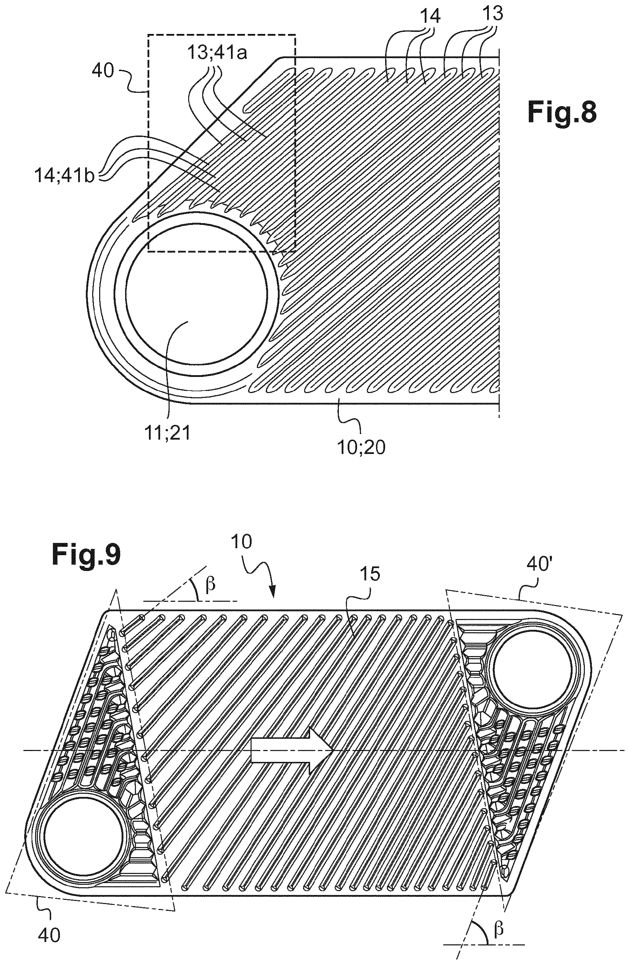

Selon un autre mode de réalisation de l'invention représenté sur la figure 8, chaque canal 41 de la zone de distribution 40 peut être formé par une ondulation sinusoïdale comportant un creux de distribution 41a et une crête de distribution 41b de formes sensiblement identiques aux creux 14 et aux crêtes 13 de la zone interne crénelée 15. Chaque creux de distribution 41 a a une profondeur identique aux creux 14 de la zone interne crénelée 15 alors que chaque crête de distribution 41b a une hauteur supérieure aux crêtes 13 de cette zone interne crénelée 15 et décroissante jusqu'à la zone interne crénelée 15.

La zone de distribution 40, comme indiqué sur la figure 8, est alors localisée dans une zone de la plaque 10 se trouvant dans une direction sensiblement perpendiculaire à la direction de circulation du premier fluide par rapport à la cheminée d'entrée 11 ou de sortie 12. Cette zone de distribution 40 est en effet une zone où le premier fluide n'a pas tendance à se diriger naturellement. Ainsi, une meilleure alimentation ou évacuation de la zone interne crénelée 15 par le premier fluide est possible grâce à cette hauteur des crêtes de distribution 41b, cette hauteur étant décroissante sur quelques centimètres. Par exemple, la différence de hauteur entre les crêtes de distribution 41b et les crêtes 13 est comprise au maximum entre 0.5 et 1 mm, cette hauteur étant décroissante sur 2 ou 3cm.

Sur la figure 5 sont représentés des peignes 59 présents dans la troisième cavité 58, entre les modules 30 et les parois 65 du carter 60. Ces peignes 59 permettent de créer des pertes de charge sur le second fluide et de l'orienter vers les secondes cavités 52.

Ces peignes 59 occupent la totalité de la hauteur entre les parois 65 du carter 60 et les modules 30 afin de faire obstacle au second fluide. La forme particulière de ces peignes 59 permet également de garantir l'espacement entre les modules 30 en périphérie de ces modules 30.

Ces peignes 59 peuvent être remplacés par des volets 57 mobiles entre les modules 30 et une paroi 65 du carter 60. Ainsi, lorsque les volets 57 sont fermés, le second fluide ne peut pas traverser la troisième cavité 58 et traverse alors majoritairement les secondes cavités 52. Par contre, lorsque les volets 57 sont ouverts, le second fluide traverse l'échangeur 50 en passant essentiellement par la troisième cavité 58 où il ne subit que très peu de pertes de charge.

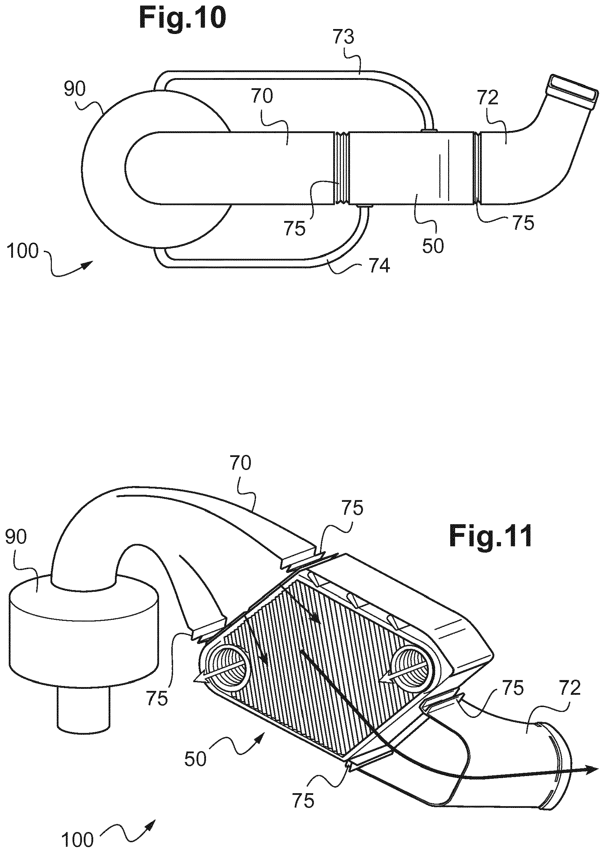

Cette fonction est particulièrement utile lors de l'application d'un tel échangeur 50 à une turbine à gaz 100 motorisant par exemple un aéronef à voilure tournante, une telle turbine à gaz 100 étant représentée sur les figures 10 et 11. Le premier fluide peut alors être constitué par l'air d'admission d'une chambre de combustion 90 de la turbine à gaz 100 et le second fluide par les gaz d'échappement sortant de la chambre de combustion 90 par une tuyère intermédiaire 70. Cet air d'admission circule dans les modules 30 avec une pression élevée alors que les gaz d'échappement entrent dans l'échangeur 50 à très hautes températures.

Lorsque les gaz d'échappement traversent les secondes cavités 52 de l'échangeur 50, ils réchauffent l'air d'admission qui traverse également l'échangeur 50 à travers les premières cavités 51. Ceci permet de réduire la consommation de carburant de la turbine à gaz 100, l'air d'admission ayant été réchauffé avant son injection dans la chambre de combustion 90. Par contre, les gaz d'échappement peuvent subir des pertes de charge en traversant les secondes cavités 52, avant de sortir de l'échangeur par une tuyère de sortie 72. Ces pertes de charge affectent directement les performances de la turbine à gaz 100 dont la puissance est diminuée.

Pour éviter cette diminution de puissance, il faut réduire ou supprimer si possible les pertes de charge des gaz d'échappement. Pour cela, les gaz d'échappement traversent la troisième cavité 58 de l'échangeur 50, les volets 57 étant ouverts. Dans ce cas, l'air d'admission n'est pas réchauffé, la consommation de carburant n'est alors pas réduite. Par contre, les gaz d'échappement subissent très peu de pertes de charge, la turbine à gaz 100 fonctionne alors à puissance maximum.

Par ailleurs, dans l'échangeur 50, le premier angle *β* entre d'une part les directions des creux 14,24 et des crêtes 13,23 de chaque plaque 10,20 et d'autre part la direction de circulation des fluides peut augmenter le long d'une même plaque 10,20 dans le sens de circulation du premier fluide dans l'échangeur 50 comme représenté sur la figure 9. Cette variation est identique pour toutes les plaques 10,20 de l'échangeur 50. Par suite, le second angle *θ* entre les creux 14,24 et les crêtes 13,23 de deux plaques 10,20 adjacentes est non nul et augmente également dans le sens de circulation du premier fluide. En effet, les plaques 10,20 sont assemblées de telle façon que les directions de leurs creux 14,24 et leurs crêtes 13,23 sont sécantes afin d'avoir un bon compromis entre échange thermique et pertes de charge entre les deux fluides.

La variation du premier angle *β* permet ainsi de compenser la variation de la température du premier fluide au cours de sa progression dans l'échangeur 50 par l'intermédiaire des turbulences subies par ce premier fluide et de conserver ainsi un nombre de Reynold Rₑ sensiblement constant. Par suite, l'échange thermique entre le premier et le second fluide est optimisé, le nombre de Reynolds Rₑ du premier fluide étant sensiblement constant dans l'ensemble de l'échangeur thermique 50.

Sur la figure 10, une vue de dessus de la turbine à gaz 100 est représentée. Une volute froide 73 permet à l'air d'admission de circuler d'un compresseur de la turbine à gaz 100 vers la conduite d'entrée 53. Une volute chaude 74 permet à l'air d'admission de circuler de la conduite de sortie 54 vers la chambre de combustion 90 de la turbine à gaz 100.

On peut également voir sur la figure 11 que l'échangeur 50 est positionné entre les tuyères 70,72. Afin de résister aux contraintes thermiques et mécaniques, notamment en absorbant les dilatations et les vibrations, tout en assurant l'étanchéité nécessaire au bon fonctionnement de l'échangeur 50, des soufflets métalliques 75 sont agencés à la jonction entre l'échangeur 50 et les différents éléments de la turbine à gaz 100 Ces soufflets 75 se trouvent notamment au niveau de la tuyère intermédiaire 70 et de la tuyère de sortie 72. De tels soufflets 75 peuvent également être utilisés au niveau des conduites d'entrée 53 et de sortie 54 d'air d'admission en liaison avec les volutes froide 73 et chaude 74.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention. Notamment, la forme des creux et de crêtes des plaques peuvent être de différentes formes.

Notamment, les creux 14,24 et les crêtes 13,23 des plaques 10,20 qui ont la forme d'ondes sinusoïdales sur l'ensemble des figures peuvent avoir d'autres formes telles que des créneaux rectangulaires ou bien de formes trapézoïdales. De même, ces creux 14,24 et les crêtes 13,23 des plaques 10,20 qui sont selon une seule direction droite sur l'ensemble des figures peuvent selon plusieurs directions sécantes sur l'ensemble de cette plaque. Par exemple, ces creux 14,24 et les crêtes 13,23 peuvent avoir la forme de chevrons ou bien de créneaux.

## Revendications

1. Echangeur thermique à plaques (50) comportant,
- une pluralité de modules (30) formés de deux plaques (10,20) en métal, chaque plaque (10,20) comportant une zone périphérique (19,29), au moins une cheminée d'entrée (11,21), au moins une cheminée de sortie (12,22), une zone interne crénelée (15) comportant des crêtes (13,23) et des creux (14,24) et au moins deux zones de distribution (40) positionnées d'une part entre chaque cheminée d'entrée (11,21) et ladite zone interne crénelée (15) et d'autre part entre chaque cheminée de sortie (12,22) et ladite zone interne crénelée (15), chaque zone de distribution (40) comportant des canaux (41) entre ladite zone interne crénelée (15) et chaque cheminée d'entrée (11,21) ou bien de sortie (12,22), deux plaques (10,20) constituant un module (30) étant en appui d'une part au niveau desdites zones périphériques (19,29) et d'autre part au niveau des points d'appui desdits creux (14,24), au moins une conduite d'entrée (53) étant formée par lesdites cheminées d'entrée (11,21) de chaque plaque (10,20) et au moins une conduite de sortie (54) étant formée par lesdites cheminées de sortie (12,22) de chaque plaque (10,20), lesdits modules (30) étant empilés de telle sorte que deux modules (30) adjacents sont en appui au moins au niveau desdites cheminées d'entrée (11,21) et desdites cheminées de sortie (12,22), les directions desdits creux (14,24) et desdites crêtes (13,23) de chaque plaque (10,20) formant un premier angle *β* avec la direction de circulation des fluides circulant dans ledit échangeur (50) et les directions desdits creux (14,24) et desdites crêtes (13,23) de deux plaques (10,20) adjacentes formant un second angle *θ* non nul entre elles,
- un carter (60) muni de parois (65) à l'intérieur duquel sont logés lesdits modules (30), une entrée (55) et une sortie (56) dudit échangeur (50) étant agencées dans ledit carter (60),
- une première cavité (51) constituée par l'espace intérieur de chaque module (30), un premier fluide pouvant circuler dans lesdites premières cavités (51) entre chaque conduite d'entrée (53) et chaque conduite de sortie (54),
- une seconde cavité (52) constituée par l'espace entre deux modules (30) adjacents et par l'espace entre chaque module (30) extrême et une paroi (65) dudit carter (60), un second fluide pouvant circuler dans lesdites les secondes cavités (52) entre une entrée (55) et une sortie (56) dudit échangeur (50), et
- une troisième cavité (58) constituée par l'espace située entre lesdites zones périphériques (19,29) desdits modules (30) et lesdites parois (65),
**caractérisé en ce que** d'une part lesdits canaux (41) sont parallèles à ladite direction de circulation dudit premier fluide pour une première partie de ladite zone de distribution (40) et d'autre part, pour une seconde partie de ladite zone de distribution (40), lesdits canaux (41) sont inclinés par rapport à ladite direction de circulation dudit premier fluide à proximité de ladite cheminée d'entrée (11,21) ou de sortie (12,22) et parallèles à ladite direction de circulation dudit premier fluide à proximité de ladite zone interne crénelée (15) afin d'uniformiser le remplissage ainsi que l'évacuation desdits modules (30) par ledit premier fluide, ladite première partie de ladite zone de distribution (40) étant constituée par l'espace situé entre ladite cheminée d'entrée (11,21) ou de sortie (12,22) et ladite zone interne crénelée (15) selon ladite direction de circulation dudit premier fluide, ladite seconde partie de ladite zone de distribution (40) étant constituée par le reste de ladite zone de distribution (40) en dehors de ladite première partie.

2. Echangeur thermique (50) selon la revendication 1,
**caractérisé en ce que** la section d'un premier canal (41) est plus importante que celle d'un second canal (41) si ledit premier canal (41) alimente une surface plus importante de ladite zone interne crénelée (15) que ledit second canal (41).

3. Echangeur thermique (50) selon l'une quelconque des revendications 1 à 2,
**caractérisé en ce qu'**un canal (41) se divise en plusieurs canaux secondaires (44), lesdits canaux secondaires (44) débouchant au niveau de ladite zone interne crénelée (15) alors que ledit canal (41) débouche dans une cheminée d'entrée (11,21) ou bien de sortie (12,22).

4. Echangeur thermique (50) selon l'une quelconque des revendications 1 à 3,
**caractérisé en ce que** chaque zone de distribution (40) comporte un sillon (42) dans lequel débouchent lesdits canaux (41), lesdits creux (14,24) et lesdites crêtes (13,23) de ladite zone interne crénelée (15) débouchant de part et d'autre de ladite zone interne crénelée (15) respectivement dans au moins un sillon (42) d'au moins une zone de distribution (40).

5. Echangeur thermique (50) selon l'une quelconque des revendications 1 à 4,
**caractérisé en ce que** ladite zone de distribution (40) comporte des conduits secondaires (48), lesdits conduits secondaires (48) étant des emboutis situés entre lesdits canaux (41) et orientés selon la direction de circulation dudit second fluide entre ladite entrée (55) et ladite sortie (56) dudit échangeur (50) afin de limiter les pertes de charge générées sur ledit second fluide.

6. Echangeur thermique (50) selon l'une quelconque des revendications 1 à 4,
**caractérisé en ce que** ladite zone de distribution (40) comporte des conduits secondaires (48), lesdits conduits secondaires (48) étant des contre-emboutis situés sur lesdits canaux (41) et orientés selon la direction de circulation dudit second fluide entre ladite entrée (55) et ladite sortie (56) dudit échangeur (50) afin de limiter les pertes de charge générées sur ledit second fluide.

7. Echangeur thermique (50) selon l'une quelconque des revendications 1 à 6,
**caractérisé en ce que** lesdits canaux (41) ont des creux de distribution (41a) et des crêtes de distribution (41b) de formes identiques auxdits creux (14,24) et auxdites crêtes (13,23) de ladite zone interne crénelée (15).

8. Echangeur thermique (50) selon la revendication 7,
**caractérisé en ce que** lesdites crêtes de distribution (41b) ont une hauteur supérieure auxdites crêtes (13,23) de ladite zone interne crénelée (15), ladite hauteur desdites crêtes de distribution (41b) étant décroissante de ladite cheminée d'entrée (11,21) ou de sortie (12,22) vers ladite zone interne crénelée (15).

9. Echangeur thermique (50) selon l'une quelconque des revendications 1 à 8,
**caractérisé en ce que** ledit premier angle *β* augmente dans ledit échangeur (50) dans le sens de circulation dudit premier fluide dans lesdites premières cavités (51).

10. Echangeur thermique (50) selon la revendication 9,
**caractérisé en ce que** la variation dudit premier angle *β* est comprise entre 5° et 20° dans l'ensemble dudit échangeur (50).

11. Echangeur thermique (50) selon l'une quelconque des revendications 1 à 10,
**caractérisé en ce que** lesdits creux (14,24) et lesdites crêtes (13,23) forment des chevrons.

12. Echangeur thermique (50) selon l'une quelconque des revendications 1 à 11,
**caractérisé en ce que** lesdits creux (14,24) et lesdites crêtes (13,23) forment des lignes droites.

13. Echangeur thermique (50) selon l'une quelconque des revendications 1 à 12,
**caractérisé en ce que** lesdites directions desdits creux (14,24) et desdites crêtes (13,23) de deux plaques (10,20) adjacentes forment entre elles un second angle *θ* compris entre 60 et 120°.

14. Turbine à gaz (100),
**caractérisé en ce qu'**elle comporte un échangeur thermique à plaques (50) selon l'une quelconque des revendications 1 à 13.

15. Turbine à gaz (100) selon la revendication 14,
**caractérisé en ce que** ledit premier fluide est l'air comprimé alimentant une chambre de combustion (90) de ladite turbine (100) et ledit second fluide est constitué par les gaz d'échappement sortant de ladite chambre de combustion (90), ladite turbine à gaz comportant au moins une volute froide (74) permettant audit air d'admission de circuler d'un compresseur de ladite turbine (100) vers ladite conduite d'entrée (53), au moins une volute chaude (73) permettant audit air d'admission de circuler de ladite conduite de sortie (54) vers ladite chambre de combustion (90), au moins une tuyère intermédiaire (70) permettant de diriger lesdits gaz d'échappement de ladite chambre de combustion (90) vers ladite entrée (55) dudit échangeur (50) et au moins une tuyère de sortie (72) permettant de diriger lesdits gaz d'échappement après leur sortie par ladite sortie (56) dudit échangeur (50).

16. Aéronef à voilure tournante,
**caractérisé en ce que** ledit aéronef comporte au moins une turbine à gaz (100) selon l'une quelconque des revendications 14 à 15.

## Patentansprüche

1. Wärmetauscher mit Platten (50), der aufweist:
- eine Mehrzahl von Modulen (30), die aus zwei Metallplatten (10, 20) geformt sind, wobei jede Platte (10, 20) einen Randbereich (19, 29), mindestens einen Eingangsschacht (11, 21), mindestens einen Ausgangsschacht (12, 22), einen inneren gekerbten Bereich (15), der Spitzen (13, 23) und Vertiefungen (14, 24) aufweist, und mindestens zwei Verteilerbereiche (40), die einerseits zwischen jedem Eingangsschacht (11, 21) und dem inneren gekerbten Bereich (15) und andererseits zwischen jedem Ausgangsschacht (12, 22) und dem inneren gekerbten Bereich (15) positioniert sind, aufweist, wobei jeder Verteilerbereich (40) Kanäle (41) zwischen dem inneren gekerbten Bereich (15) und jedem Eingangsschacht (11, 21) oder Ausgangsschacht (12, 22) aufweist, wobei zwei Platten (10, 20) ein Modul (30) bildern, die sich einerseits an den Randbereichen (19, 29) und andererseits an Stützpunkten der Vertiefungen (14, 24) abstützen, wobei mindestens ein Eingangskanal (53) durch die Eingangsschächte (11, 21) jeder Platte (10, 20) und mindestens ein Ausgangskanal (54) durch die Ausgangsschächte (12, 22) jeder Platte (10, 20) gebildet wird, wobei die Module (30) derart gestapelt sind, dass zwei benachbarte Module (30) sich mindestens an den Eingangsschächten (11, 21) und den Ausgangsschächten (12, 22) abstützen, wobei die Richtungen der Vertiefungen (14, 24) und der Spitzen (13, 23) jeder Platte (10, 20) einen ersten Winkel β mit der Flussrichtung von Fluiden bilden, die in dem Wärmetauscher (50) zirkulieren, und die Richtungen der Vertiefungen (14, 24) und die Richtungen der Spitzen (13, 23) zweier benachbarter Platten (10, 20) einen zweiten Winkel θ ungleich Null miteinander einschließen,
- ein Gehäuse (60) mit Wandungen (65), in dessen Innerem die Module (30) untergebracht sind, wobei ein Einlass (55) und ein Auslass (56) des Wärmetauschers (50) in dem Gehäuse (60) angeordnet sind,
- einen ersten Hohlraum (51), der durch den Innenraum eines jeden Moduls (30) gebildet wird, wobei ein erstes Fluid in den ersten Hohlräumen (51) zwischen jedem Eingangskanal (53) und jedem Ausgangskanal (54) fließen kann,
- einen zweiten Hohlraum (52), der durch den Raum zwischen zwei benachbarten Modulen (30) und durch den Raum zwischen jedem äußersten Modul (30) und einer Wandung (65) des Gehäuses (60) gebildet wird, wobei ein zweites Fluid in den zweiten Hohlräumen (52) zwischen einem Einlass (55) und einem Auslass (56) des Wärmetauschers (50) fließen kann, und
- einen dritten Hohlraum (58), der durch den Raum gebildet wird, der zwischen den Randbereichen (19, 29) der Module (30) und den Wandungen (65) liegt,
**dadurch gekennzeichnet, dass** einerseits die Kanäle (41) parallel zu der Flussrichtung des ersten Fluids für einen ersten Teil des Verteilerbereichs (40) sind, und andererseits für einen zweiten Teil des Verteilerbereichs (40) die Kanäle (41) relativ zu der Flussrichtung des ersten Fluids in der Nähe des Eingangsschachtes (11, 21) oder des Ausgangsschachtes (12, 22) schräg und parallel zu der Flussrichtung des ersten Fluids in der Nähe des inneren gekerbten Bereichs (15) verlaufen, um das Füllen sowie das Entleeren des ersten Fluids der Module (30) zu vergleichmäßigen, wobei der erste Teil des Verteilerbereichs (40) aus dem Raum besteht, der zwischen dem Eingangsschacht (11, 21) oder dem Ausgangsschacht (12, 22) und dem inneren gekerbten Bereich (15) in der Flussrichtung des ersten Fluids gelegen ist, wobei der zweite Teil des Verteilerbereichs (40) aus dem Rest des Verteilerbereichs (40) ausgenommen den ersten Teil besteht.

2. Wärmetauscher (50) nach Anspruch 1,
**dadurch gekennzeichnet, dass** der Querschnitt eines ersten Kanals (41) größer ist als der eines zweiten Kanals (41), wenn der erste Kanal (41) eine größere Fläche des inneren gekerbten Bereichs (15) als der zweite Kanal (41) speist.

3. Wärmetauscher (50) nach einem der Ansprüche 1 bis 2,
**dadurch gekennzeichnet, dass** ein Kanal (41) sich in mehrere sekundäre Kanäle (44) verzweigt, wobei die sekundären Kanäle (44) in den inneren gekerbten Bereich (15) münden, während der Kanal (41) in einen Eingangsschacht (11, 21) oder einem Ausgangsschacht (12, 22) mündet.

4. Wärmetauscher (50) nach einem der Ansprüche 1 bis 3,
**dadurch gekennzeichnet, dass** jeder Verteilerbereich (40) eine Rille (42) aufweist, in der die Kanäle (41) münden, wobei die Vertiefungen (14, 24) und die Spitzen (13, 23) des inneren gekerbten Bereichs (15) zu beiden Seiten des inneren gekerbten Bereichs (15) jeweils in mindestens eine Rille (42) mindestens eines Verteilerbereichs (40) münden.

5. Wärmetauscher (50) nach einem der Ansprüche 1 bis 4,
**dadurch gekennzeichnet, dass** der Verteilerbereich (40) sekundäre Kanäle (48) aufweist, wobei die sekundären Kanäle (48) Tiefziehteile sind, die zwischen den Kanälen (41) gelegen und in Flussrichtung des zweiten Fluids zwischen dem Einlass (55) und dem Auslass (56) des Wärmetauschers (50) orientiert sind, um die Druckverluste, die in dem zweiten Fluid erzeugt werden, zu begrenzen.

6. Wärmetauscher (50) nach einem der Ansprüche 1 bis 4,
**dadurch gekennzeichnet, dass** der Verteilerbereich (40) sekundäre Kanäle (48) aufweist, wobei die sekundären Kanäle Gegen-Tiefziehteile sind, die in den Kanälen (41) gelegen und in Flussrichtung des zweiten Fluids zwischen dem Einlass (55) und dem Auslass (56) des Wärmetauschers (50) orientiert sind, um die in dem zweiten Fluid erzeugten Druckverluste zu begrenzen.

7. Wärmetauscher (50) nach einem der Ansprüche 1 bis 6,
**dadurch gekennzeichnet, dass** die Kanäle (41) Verteilervertiefungen (41 a) und Verteilerspitzen (41b) haben, die identische Formen wie die Vertiefungen (14, 24) und wie die Spitzen (13, 23) des inneren gekerbten Bereichs (15) aufweisen.

8. Wärmetauscher (50) nach Anspruch 7,
**dadurch gekennzeichnet, dass** die Verteilerspitzen (41b) eine Höhe aufweisen, die größer ist als die Vertiefungen (13, 23) des inneren gekerbten Bereichs (15), wobei die Höhe der Verteilerspitzen (41b) von dem Eingangsschacht (11, 21) oder dem Ausgangsschacht (12, 22) aus zu dem inneren gekerbten Bereich (15) hin kleiner wird.

9. Wärmetauscher (50) nach einem der Ansprüche 1 bis 8,
**dadurch gekennzeichnet, dass** der erste Winkel β in dem Wärmetauscher (50) in Richtung des Flusses des ersten Fluids in den ersten Hohlräumen (51) größer wird.

10. Wärmetauscher (50) nach Anspruch 9,
**dadurch gekennzeichnet, dass** die Veränderung des ersten Winkels β zwischen 5° und 20° in der Gesamtheit des Wärmetauschers (50) beträgt.

11. Wärmetauscher (50) nach einem der Ansprüche 1 bis 10,
**dadurch gekennzeichnet, dass** die Vertiefungen (14, 24) und die Spitzen (13, 23) Sparren bilden.

12. Wärmetauscher (50) nach einem der Ansprüche 1 bis 11,
**dadurch gekennzeichnet, dass** die Vertiefungen (14, 24) und die Spitzen (13, 23) gerade Linien bilden.

13. Wärmetauscher (50) nach einem der Ansprüche 1 bis 12,
**dadurch gekennzeichnet, dass** die Richtungen der Vertiefungen (14, 24) und der Spitzen (13, 23) zweier benachbarter Platten (10, 20) untereinander einen zweiten Winkel θ zwischen 60 und 120° einnehmen.

14. Gasturbine (100),
**dadurch gekennzeichnet, dass** sie einen Wärmetauscher mit Platten (50) nach einem der Ansprüche 1 bis 13 aufweist.

15. Gasturbine (100) nach Anspruch 14,
**dadurch gekennzeichnet, dass** das erste Fluid komprimierte Luft ist, mit der eine Verbrennungskammer (90) der Turbine (100) gespeist wird, und das zweite Fluid aus den Abgasen besteht, die aus der Verbrennungskammer (90) austreten, wobei die Gasturbine mindestens eine kalte Volute (74) aufweist, die es der Ansaugluft erlaubt, von einem Kompressor der Turbine (100) zu dem Eingangskanal (53) zu strömen, wobei mindestens eine warme Volute (73) es der Ansaugluft erlaubt, von dem Ausgangskanal (54) zu der Verbrennungskammer (90) zu strömen, wobei mindestens eine Zwischendüse (70) es erlaubt, die Abgase der Verbrennungskammer (90) zu dem Einlass (55) des Wärmetauschers (50) zu leiten, und mindestens eine Ausgangsdüse (72) es erlaubt, die Abgase nach deren Austritt aus dem Auslass (56) des Wärmetauschers (50) zu führen.

16. Drehflügel-Luftfahrzeug,
**dadurch gekennzeichnet, dass** das Luftfahrzeug mindestens eine Gasturbine (100) nach einem der Ansprüche 14 bis 15 aufweist.

## Claims

1. Plate heat exchanger (50) comprising:
- a plurality of modules (30) formed of two metal plates (10,20), each plate (10,20) comprising a peripheral zone (19,29), at least one inlet chimney (11,21), at least one outlet chimney (12,22), a crenellated inner zone (15) comprising ridges (13,23) and troughs (14,24) and at least two distribution zones (40) located on the one hand between each inlet chimney (11,21) and said crenellated inner zone (15) and on the other hand between each outlet chimney (12,22) and said crenellated inner zone (15), each distribution zone (40) comprising channels (41) between said crenellated inner zone (15) and each inlet chimney (11,21) or each outlet chimney (12,22), two plates (10,20) constituting a module (30) being in contact on the one hand at said peripheral zones (19,29) and on the other hand at the points of contact of said troughs (14,24), at least one inlet pipe (53) being formed by said inlet chimneys (11,21) of each plate (10,20) and at least one outlet pipe (54) being formed by said outlet chimneys (12,22) of each plate (10,20), said modules (30) being stacked in such a manner that two adjacent modules (30) are in contact at least at said inlet chimneys (11,21) and at said outlet chimneys (12,22), the directions of said troughs (14,24) and of said ridges (13,23) of each plate (10,20) forming a first angle *β* with the flow direction of the fluids flowing in said exchanger (50) and the directions of said troughs (14,24) and of said ridges (13,23) of two adjacent plates (10,20) forming a non-zero second angle *θ* between them,
- a casing (60) provided with walls (65) within which said modules (30) are housed, an inlet (55) and an outlet (56) of said exchanger (50) being arranged in said casing (60),
- a first cavity (51) constituted by the inside space of each module (30), a first fluid being capable of flowing in said first cavities (51) between each inlet pipe (53) and each outlet pipe (54),
- a second cavity (52) constituted by the space between two adjacent modules (30) and by the space between each extreme module (30) and a wall (65) of said casing (60), a second fluid being capable of flowing in said second cavities (52) between an inlet (55) and an outlet (56) of said exchanger (50), and
- a third cavity (58) constituted by the space situated between said peripheral zones (19,29) of said modules (30) and said walls (65),
**characterised in that** on the one hand said channels (41) are parallel to said flow direction of said first fluid for a first portion of said distribution zone (40) and on the other hand, for a second portion of said distribution zone (40), said channels (41) are inclined relative to said flow direction of said first fluid in the proximity of said inlet chimney (11,21) or outlet chimney (12,22) and parallel to said flow direction of said first fluid in the proximity of said crenellated inner zone (15) in order to make the filling and the discharge of said modules (30) by said first fluid uniform, said first portion of said distribution zone (40) being constituted by the space situated between said inlet chimney (11,21) or outlet chimney (12,22) and said crenellated inner zone (15) in said flow direction of said first fluid, said second portion of said distribution zone (40) being constituted by the remainder of said distribution zone (40) outside said first portion.

2. Heat exchanger (50) according to claim 1,
**characterised in that** the section of a first channel (41) is larger than that of a second channel (41) if said first channel (41) feeds a larger area of said crenellated inner zone (15) than said second channel (41).

3. Heat exchanger (50) according to any one of claims 1 to 2,
**characterised in that** a channel (41) divides into a plurality of secondary channels (44), said secondary channels (44) opening out into said crenellated inner zone (15), whereas said channel (41) opens out into an inlet chimney (11,21) or an outlet chimney (12,22).

4. Heat exchanger (50) according to any one of claims 1 to 3,
**characterised in that** each distribution zone (40) comprises a furrow (42) into which said channels (41) open out, said troughs (14,24) and said ridges (13,23) of said crenellated inner zone (15) opening out on one side and the other side of said crenellated inner zone (15) respectively into at least one furrow (42) of at least one distribution zone (40).

5. Heat exchanger (50) according to any one of claims 1 to 4,
**characterised in that** said distribution zone (40) comprises secondary ducts (48), said secondary ducts (48) being indentations situated between said channels (41) and oriented in the flow direction of said second fluid between said inlet (55) and said outlet (56) of said heat exchanger (50) in order to limit the pressure losses generated in said second fluid.

6. Heat exchanger (50) according to any one of claims 1 to 4,
**characterised in that** said distribution zone (40) comprises secondary ducts (48), said secondary ducts (48) being projections situated on said channels (41) and oriented in the flow direction of said second fluid between said inlet (55) and said outlet (56) of said exchanger (50) in order to limit the pressure losses generated in said second fluid.

7. Heat exchanger (50) according to any one of claims 1 to 6,
**characterised in that** said channels (41) have distribution troughs (41a) and distribution ridges (41b) of shapes identical to said troughs (14,24) and to said ridges (13,23) of said crenellated inner zone (15).

8. Heat exchanger (50) according to claim 7,
**characterised in that** said distribution ridges (41b) are of a height greater than said ridges (13,23) of said crenellated inner zone (15), said height of said distribution ridges (41b) decreasing from said inlet chimney (11,21) or from said outlet chimney (12,22) towards said crenellated inner zone (15).

9. Heat exchanger (50) according to any one of claims 1 to 8,
**characterised in that** said first angle *β* increases in said heat exchanger (50) in the flow direction of said first fluid in said first cavities (51).

10. Heat exchanger (50) according to claim 9,
**characterised in that** the variation of said first angle *β* is comprised between 5° and 20° throughout said exchanger (50).

11. Heat exchanger (50) according to any one of claims 1 to 10,
**characterised in that** said troughs (14,24) and said ridges (13,23) form chevrons.

12. Heat exchanger (50) according to any one of claims 1 to 11,
**characterised in that** said troughs (14,24) and said ridges (13,23) form straight lines.

13. Heat exchanger (50) according to any one of claims 1 to 12,
**characterised in that** said directions of said troughs (14,24) and of said ridges (13,23) of two adjacent plates (10,20) form between them a second angle *θ* comprised between 60 and 120°.

14. Gas turbine (100),
**characterised in that** it comprises a plate heat exchanger (50) according to any one of claims 1 to 13.

15. Gas turbine (100) according to claim 14,
**characterised in that** said first fluid is the compressed air feeding a combustion chamber (90) of said turbine (100) and said second fluid is constituted by the exhaust gases leaving said combustion chamber (90), said gas turbine comprising at least one cold volute (74) enabling said admission air to flow from a compressor of said turbine (100) to said inlet pipe (53), at least one hot volute (73) enabling said admission air to flow from said outlet pipe (54) to said combustion chamber (90), at least one intermediate nozzle (70) enabling said exhaust gases from said combustion chamber (90) to be directed to said inlet (55) of said exchanger (50) and at least one outlet nozzle (72) enabling said exhaust gases to be directed after exiting via said outlet (56) of said exchanger (50).

16. Rotary wing aircraft,
**characterised in that** said aircraft comprises at least one gas turbine (100) according to any one of claims 14 to 15.
